Europäisches Patentamt

(19) European Patent Office

Office européen des brevets

(11) Numéro de publication: **0 245 148**
**B1**

(12) **FASCICULE DE BREVET EUROPEEN**

(45) Date de publication du fascicule du brevet: **16.01.91**

(51) Int. Cl.$^5$: **G 21 F 9/04,** C 01 D 1/04

(21) Numéro de dépôt: **87400939.2**

(22) Date de dépôt: **23.04.87**

(54) Installation pour la transformation de sodium en soude aqueuse.

(30) Priorité: **30.04.86 FR 8606266**

(43) Date de publication de la demande:
**11.11.87 Bulletin 87/46**

(45) Mention de la délivrance du brevet:
**16.01.91 Bulletin 91/03**

(84) Etats contractants désignés:
**DE FR GB IT**

(56) Documents cités:
**FR-A-1 400 431**
**FR-A-2 329 059**
**GB-A-574 360**
**US-A-2 880 065**

(73) Titulaire: **COMMISSARIAT A L'ENERGIE ATOMIQUE Etablissement de Caractère Scientifique Technique et Industriel 31/33, rue de la Fédération F-75015 Paris (FR)**

(72) Inventeur: **Levillain, Claude**
**17 Tour d'Aygosi**
**F-13100 Aix en Provence (FR)**
Inventeur: **Lafon, Alain**
**Résidence l'Horizon A 33 Avenue Philippe Solari**
**F-13090 Aix en Provence (FR)**

(74) Mandataire: **Mongrédien, André et al**
**c/o BREVATOME 25, rue de Ponthieu**
**F-75008 Paris (FR)**

Courier Press, Leamington Spa, England.

## Description

La présente invention a pour objet une installation pour la transformation de sodium en soude aqueuse permettant d'obtenir une sécurité accrue et un débit suffisant pour une production industrielle.

L'invention est relative, de manière générale, au traitement des déchets du sodium radioactif ou non provenant des circuits primaires ou secondaires de refroidissement d'un réacteur nucléaire à neutrons rapides ou encore de certaines installations d'essais ou de certains chantiers d'entretien ou d'intervention.

L'invention se rapporte au traitement de ce sodium suivant un principe connu consistant à le faire réagir avec de l'eau ou une solution aqueuse pour obtenir d'une part de la soude aqueuse contenant les produits de la réaction, lesquels seront éliminés ultérieurement par tout moyen approprié et, d'autre part, de l'hydrogène gazeux.

On sait que le contrôle de la réaction de ce procédé doit être très précis pour garantir que les quantités de sodium mises en réaction avec l'eau restent bien en-dessous d'un seuil à partir duquel la réaction est dangereusement exothermique, voire explosive.

Dans l'état actuel de la technique, la transformation du sodium se fait généralement en mettant en contact le sodium avec une dispersion d'une phase liquide réactive dans une phase liquide non réactive. Cet état de la technique est illustré notamment par le brevet français FR—A—1 549 735, déposé le 15 décembre 1967 par la Société E.I. DUPONT de NEMOURS AND CO.

Cette technique de transformation présente cependant un certain nombre d'inconvénients.

Ainsi, la réaction chimique ne peut pas ê tre arrêtée instantanément et son contrôle est délicat; en outre, les quantités de sodium transformé par unité de temps ne peuvent pas être connues d'une manière très précise.

Le document GB—A—574 360 décrit un appareil de production de soude par réaction de sodium avec de l'eau.

Une barre de sodium solide 3 est introduite à la partie supérieure de l'appareil et débouche par l'ouverture d'une buse 1. Une canalisation 6 permet d'amener l'eau pour la réaction. Cette eau est introduite par un passage étroit 5 qui entoure l'orifice 2. L'eau est ainsi mise en contact avec le sodium. L'hydrogène dégagé au cours de la réaction qui a lieu à la partie inférieure de l'appareil est évacué par la conduite 20 après être passé par les ouvertures 21 prévues dans le cylindre 9.

La présente invention a pour but de remédier à ces inconvénients en proposant une installation de réaction en continu entre le sodium et un liquide de réaction qui soit à la fois de toute sécurité et d'un débit suffisant pour une production industrielle.

L'objet de l'invention est une installation pour la transformation de sodium en soude aqueuse comportant:
— une tête d'injection à débit contrôlé de sodium comprenant au moins un trou permettant le passage du sodium sous pression;
— des moyens d'alimentation en sodium de la tête d'injection.

Selon l'invention, elle comporte:
— un déflecteur de jet auquel est incorporée la tête d'injection, disposé à l'intérieur d'une cuve et orienté vers le fond de celle-ci; et
— une lance de projection d'un liquide de réaction, le niveau du liquide de réaction étant réglé de manière à se trouver au-dessous de la tête d'injection de sodium.

Dans le mode de réalisation préféré, la tête d'injection constitue la partie centrale du déflecteur, le déflecteur présente une symétrie de révolution autour d'un axe vertical, la tête d'injection constituant la partie centrale de ce déflecteur, et la lance de projection est placée suivant cet axe et au-dessous de la tête d'injection.

Selon une autre caractéristique de l'installation objet de l'invention, l'ensemble formé par le déflecteur, la tête d'injection de sodium et la lance de projection du liquide de réaction est entouré d'au moins une paroi poreuse permettant le passage de l'hydrogène dégagé au cours de la réaction.

Pour régler le niveau du liquide de réaction, l'installation peut comporter:
— un couvercle séparant la cuve en un volume inférieur contenant le liquide de réaction et un volume supérieur, un espace étant ménagé entre la paroi interne de la cuve et le bord du couvercle et celui-ci se trouvant à un niveau inférieur à celui de la tête d'injection; et
— des moyens pour maintenir la surface libre du liquide de réaction au même niveau que ce couvercle.

Les produits de la réaction sont d'une part de la soude aqueuse formée lors du contact turbulent et intime du jet de liquide de réaction avec le sodium injecté sous débit contrôlé et, d'autre part, de l'hydrogène gazeux. La présence d'au moins une paroi poreuse disposée comme indiqué ci-dessus et le fait que le niveau du liquide de réaction soit réglé de manière à se trouver au-dessous de la tête d'injection de sodium au niveau du couvercle intermédiaire de séparation des phases liquide/gaz permettent d'obtenir un lavage et un filtrage de l'hydrogène avant que celui-ci ne se dirige vers le haut de la cuve. En outre, on interdit ainsi, lorsque l'installation est à l'arrêt, le contact entre le sodium contenu dans la tête d'injection et le liquide de réaction.

En cas d'interruption du jet de liquide de réaction et de l'alimentation sous pression du sodium, les trous de la tête d'injection sont rapidement obturés par la formation de soude.

Selon un mode particulier de réalisation de cette installation, les moyens d'alimentation de la tête d'injection en sodium comprennent:
— une cuve de stockage du sodium liquide;
— au moins une conduite reliant ladite cuve au déflecteur de jet;
— une boîte à clapets disposée sur ladite conduite; et

— une pompe volumétrique reliée à cette boîte à clapets par une conduite.

Selon un mode de réalisation préféré, l'installation comporte en outre des moyens de régulation thermique du sodium arrivant à la tête d'injection. Dans le mode de réalisation préféré, ces moyens de régulation thermique comprennent:

— une conduite communiquant avec la tête d'injection et dans laquelle passe le sodium;

— un tube entourant cette conduite, l'espace intérieur du tube étant rempli d'un liquide organique; et

— des moyens de chauffage de ce liquide organique.

Les moyens de chauffage du liquide organique peuvent comprendre au moins un élément chauffant placé à l'intérieur du liquide et on peut en outre prévoir un matériau d'isolation thermique placé à l'extérieur du tube contenant le liquide organique et en contact avec ce tube.

L'invention sera mieux comprise à l'aide de la description qui suit d'un mode particulier de réalisation, description faite en référence aux dessins annexés, dans lesquels:

— la figure 1 est le schéma d'ensemble d'une installation de transformation de sodium en soude aqueuse selon l'invention,

— la figure 2 représente à plus grande échelle les détails de la tête de réaction de cette installation, et

— la figure 3 est une vue schématique en coupe verticale montrant comment cette installation peut être placée sur un cadre transportable.

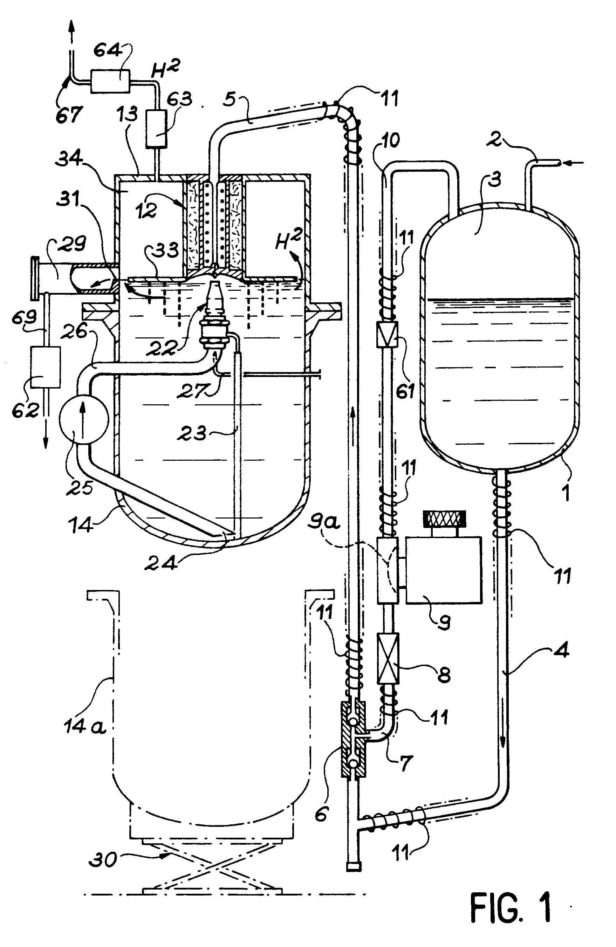

On se reportera tout d'abord à la figure 1 pour décrire l'ensemble de l'installation.

Celle-ci comprend une cuve de stockage 1 de sodium maintenu liquide à une température supérieure à 98°C. Ce sodium est introduit dans la cuve par une canalisation 2.

Le volume supérieur 3 de la cuve, au-dessus du niveau de sodium liquide, est rempli de gaz neutre, par exemple d'argon, à l'aide de canalisations (non représentées sur la figure 1).

Le sodium est extrait de la cuve 1 par une canalisation descendante 4 alimentant la base d'une colonne montante 5 équipée en sa partie inférieure d'une boîte à deux clapets 6 dont la partie centrale est reliée par une canalisation 7 et un filtre 8 à une pompe à membrane 9 reliée par ailleurs au volume supérieur 3 de la cuve 1 par une canalisation 10. Des moyens de chauffage, schématisés par des éléments 11, permettent de maintenir le sodium à l'état liquide dans les canalisations 4, 5 et 10. Les diverses canalisations sont équipées de moyens de calorifugeage, non représentés.

La canalisation 10 équipée d'un clapet antiretour 61 permet, lors d'un remplissage initial de la cuve 1 avec du sodium pur, de purger le circuit de la pompe et d'amener ainsi au niveau de la membrane 9a, sensible aux impuretés, du sodium pur.

Après cette purge préliminaire, le sodium est solidifié dans la canalisation 10 par arrêt du chauffage, et maintenu liquide dans la canalisation 7 et au niveau de la pompe 9. Le chauffage de la canalisation 5, située au-dessus de la boîte à clapets 6, permet ensuite d'injecter du sodium à traiter dans la tête d'injection 21.

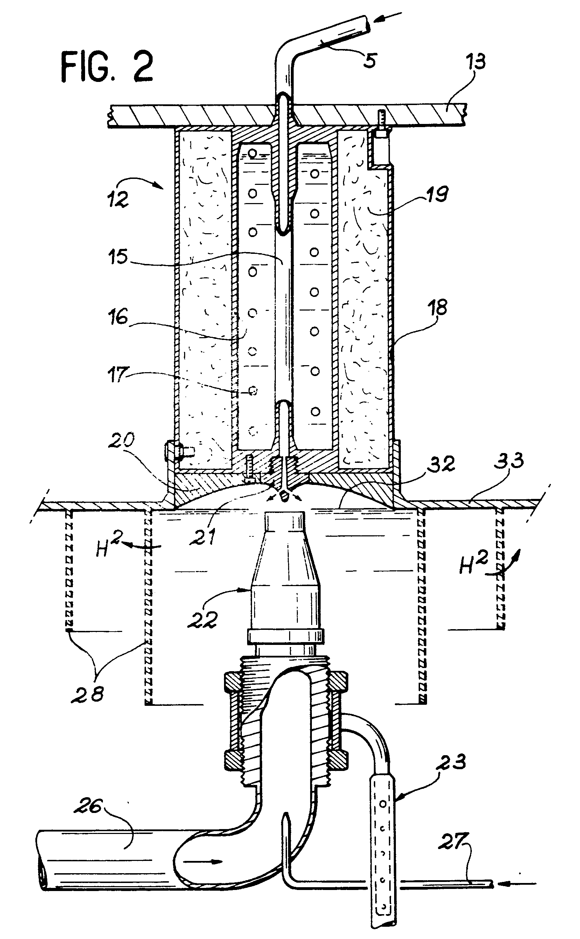

L'extrémité supérieure de la canalisation 5 alimente axialement la tête de réaction 12 de l'installation, qui est représentée à plus grande échelle sur la figure 2.

Cette tête de réaction 12 est fixée en-dessous du couvercle supérieur 13 de la cuve de réaction 14. Elle comprend une canalisation centrale 15 disposée axialement à l'intérieur d'un tube 16 rempli d'un liquide organique neutre vis-à-vis du sodium et permettant le contrôle de la température de la canalisation 15 grâce à des éléments chauffants 17. Cet ensemble est lui-même à l'intérieur d'un autre tube 18 avec interposition d'un matériau isolant thermique 19.

A la base de cet ensemble se trouve suspendu un déflecteur de jet 20 dont la partie centrale est constituée d'une tête d'injection 21 à débit contrôlé de sodium liquide alimentée par la canalisation 15. La forme de révolution du déflecteur de jet 20 et de sa partie centrale 21 est profilée de manière à rèpartir au mieux le jet de liquide projeté par la lance de jet 22 disposée axialement et juste en-dessous de la tête d'injection 21. Cette lance, maintenue en position axiale par trois tiges de fixation 23 disposées à 120° les unes par rapport aux autres et dont une seule est visible sur la coupe de la figure 2, est alimentée en liquide de réaction par une canalisation 24 qui aspire celui-ci en fond de cuve (figure 1) et le met sous pression par une pompe 25 reliée par une canalisation 26 à la lance 22. Une canalisation 27 d'injection d'eau pure permet d'ajuster la concentration en soude de la solution.

La partie centrale du réacteur, qui comprend le déflecteur 20 et, en vis-à-vis, la tête d'injection de sodium liquide 21 et la lance de jet 22, est entourée de cylindres successifs 28 en tôle présentant des petites perforations constituant des parois poreuses de filtration qui permettent de retenir les particules solides entraînées par l'hydrogène formé dans la partie centrale du réacteur. La solution aqueuse peut se déverser par un trop-plein 29 et une tuyauterie 69 dans une cuve de réception (non représentée).

Pour éviter l'entraînement d'hydrogène dans la cuve de réception, on peut disposer un purgeur 62 sur la tuyauterie 69.

La figure 1 montre encore qu'on peut prévoir un élévateur pour monter et abaisser la cuve de réaction 14. On a représenté schématiquement en traits mixtes la cuve de réaction en position basse 14a reposant sur l'élévateur 30 également représenté en traits mixtes.

Le niveau de la solution aqueuse à l'intérieur de la cuve de réaction 14 est maintenu à la cote repérée par la référence 32 sur la figure 2, juste au niveau d'un couvercle intermédiaire 33 séparant la cuve 14 en un volume inférieur rempli de soude aqueuse en formation et un volume supérieur 34 de récupération de l'hydrogène formé par la réaction qui est évacué par une tuyauterie 67 à travers un filtre 63 et un débitmètre 64 (figure 1).

Afin de maintenir la surface libre du liquide de réaction au même niveau que le couvercle intermédiaire 33, on peut équiper le trop-plein 29 d'une garde hydraulique 31. Dans l'exemple représenté ici, celle-ci est constituée d'une paroi verticale, placée à l'entrée de la conduite 29, dont le rebord supérieur est horizontal et situé au même niveau que le couvercle 33, le liquide s'écoulant par dessus ce rebord.

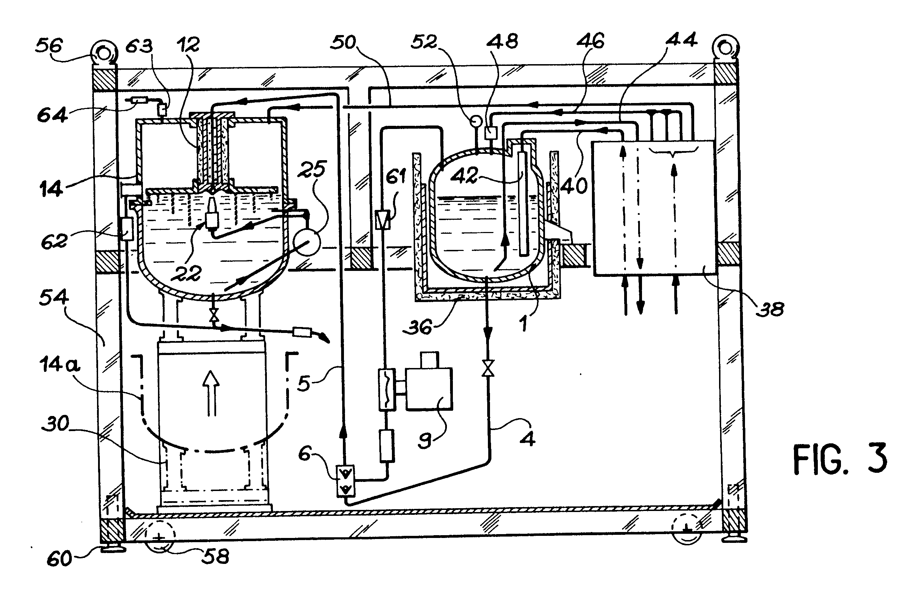

La figure 3 montre comment l'installation objet de l'invention peut être placée sur un cadre support, ce qui permet de la transporter d'un site à un autre, suivant les besoins: on évite ainsi d'avoir sur chaque site une installation qui ne serait utilisée qu'à des intervalles de temps assez longs.

On retrouve sur la figure 3 la cuve de stockage 1 reliée à la cuve de réaction 14 par les canalisations 4 et 5, cette dernière étant reliée à la pompe 9 par la boîte à clapets 6. On retrouve également, à l'interieur de la cuve 14, la tête de réaction 12 et la lance de jet 22 alimentée par la pompe 25, ainsi que l'élévateur 30 de la cuve 14.

On voit sur cette figure 3 que la cuve 1 est placée à l'intérieur d'un récipient 36 qui sert de bac de rétention en cas de fuite de sodium. Elle est reliée à un ensemble de commande 38 par un certain nombre de canalisations. L'alimentation en sodium se fait par la conduite 40 équipée d'un filtre 42 tandis que la canalisation 44 sert à la vidange du sodium. La canalisation 46, équipée d'un filtre à vapeur de sodium 48, sert à alimenter la partie supérieure de la cuve 1 en gaz neutre et la canalisation 50 à alimenter en gaz neutre la partie supérieure de la cuve de réaction 14. Ce gaz neutre peut être, par exemple, de l'azote. Enfin, un manomètre 52 permet de contrôler la pression à l'intérieur de la cuve de stockage.

L'ensemble de l'installation qu'on vient de décrire est monté sur un cadre 54 équipé d'anneaux 56 qui en permettent la manutention. Ce cadre comporte en outre des roues 58, qui peuvent être auto-orientables, et des vérins d'immobilisation 60. Pour le transport, il peut être fermé sur toutes ses faces par des panneaux légers et résistants (non représentés).

L'invention présente des avantages intéressants dont le principal est de permettre une bonne maîtrise de la réaction entre le sodium et la solution aqueuse puisque le sodium est injecté en petites quantités dans le jet de la solution aqueuse à fort débit. De plus, la structure de la tête d'injection de sodium avec les trous inclinés par rapport à l'axe de révolution du déflecteur et la forme de celui-ci empêchent l'eau de pénétrer à l'intérieur des trous. La sécurité est accrue par le fait que les trous d'injection de sodium sont obturés rapidement par la formation d'un bouchon solide de soude en cas d'interruption de l'alimentation en sodium. En effet, dans ce cas, une partie de la masse de sodium qui se trouve dans les trous réagit avec de l'eau résiduelle ou avec l'hydrogène qui se trouve dans l'atmosphère de la cuve pour former de la soude et/ou de l'hydrure. D'autre part, la présence des parois perforées 28 et le réglage du niveau de la surface libre du liquide de réaction juste au-dessous de la tête d'injection 21 et du couvercle 33 assurent un bon lavage de l'hydrogène et interdisent tout contact entre le sodium contenu dans la tête de réaction et l'eau lorsque l'installation est à l'arrêt: en effet, comme on peut le voir sur la figure 2, le dessin de la tête d'injection 21 et du déflecteur 20 est tel que les trous d'injection débouchent légèrement au-dessus de la surface libre du liquide. Enfin, les moyens de régulation thermique du sodium arrivant à la tête d'injection 21 permettent soit de le maintenir liquide, soit de le maintenir solide.

## Revendications

1. Installation pour la transformation de sodium en soude aqueuse comportant:
— une tête d'injection (21) à débit contrôlé de sodium comprenant au moins un trou permettant le passage du sodium sous pression;
— des moyens d'alimentation en sodium de la tête d'injection (21);
caractérisée en ce qu'elle comporte:
— un déflecteur de jet (20) auquel est incorporée la tête d'injection (21), disposé à l'intérieur d'une cuve (14) et orienté vers le fond de celle-ci; et
— une lance (22) de projection d'un liquide de réaction, le niveau du liquide de réaction étant réglé de manière à se trouver au-dessous de la tête d'injection de sodium (21).

2. Installation selon la revendication 1, caractérisée en ce que la tête d'injection (21) constitue la partie centrale du déflecteur (20), le déflecteur (20) présentant une symétrie de révolution autour d'un axe vertical, la lance de projection (22) est placée suivant cet axe et au-dessous de la tête d'injection.

3. Installation selon l'une quelconque des revendications 1 ou 2, caractérisée en ce que l'ensemble formé par le déflecteur (20), la tête d'injection de sodium (21) et la lance de projection (22) est entouré d'au moins une paroi poreuse (28) permettant le passage de l'hydrogène dégagé au cours de la réaction.

4. Installation selon la revendication 3, caractérisée en ce qu'elle comporte en outre:
— un couvercle (33) séparant la cuve (14) en un volume inférieur contenant le liquide de réaction et un volume supérieur, un espace étant ménagé entre la paroi interne de la cuve (14) et le bord du couvercle (33) et celui-ci se trouvant à un niveau inférieur à celui de la tête d'injection (21); et
— des moyens pour maintenir la surface libre ou niveau du liquide de réaction au même niveau que ce couvercle (33).

5. Installation selon l'une quelconque des revendications 1 à 4, caractérisée en ce que les moyens d'alimentation en sodium de la tête d'injection (21) comprennent:
— une cuve (1) de stockage de sodium liquide;
— au moins une conduite (5) reliant ladite cuve (1) au déflecteur de jet (20);

— une boîte à clapets (6) disposée sur ladite conduite (5); et
— une pompe volumétrique (9) reliée à cette boîte à clapets par une conduite (7).

6. Installation selon l'une quelconque des revendications 1 à 5, caractérisée en ce qu'elle comporte en outre des moyens de régulation thermique du sodium arrivant à la tête d'injection (21).

7. Installation selon la revendication 6, caractérisée en ce que lesdits moyens de régulation thermique du sodium arrivant à la tête d'injection (21) comprennent:
— une conduite (15) communiquant avec la tête d'injection (21) et dans laquelle passe le sodium;
— un tube (16) entourant la conduite (15), l'espace intérieur du tube (16) étant rempli d'un liquide organique; et
— des moyens de chauffage (17) de ce liquide organique.

8. Installation selon la revendication 7, caractérisée en ce que les moyens de chauffage du liquide organique comprennent au moins un élément chauffant (17) placé à l'intérieur de ce liquide organique.

9. Installation selon l'une quelconque des revendications 7 ou 8, caractérisée en ce qu'elle comprend en outre un matériau d'isolation thermique (19) placé à l'extérieur du tube (16) et en contact avec celui-ci.

## Patentansprüche

1. Einrichtung zur Umwandlung von Natrium in wässrige Soda mit:
— einem Injektionskopf (21) mit kontrolliertem Natriumausstoß mit wenigstens einem Loch, das den Austritt von unter Druck stehendem Natrium ermöglicht;
— einer Natriumversorgungsvorrichtung für den Injektionskopf (21);
dadurch gekennzeichnet, daß sie aufweist:
— eine Strahlablenkung (20), in die der Injektionskopf (21) eingebaut ist, die im Innern einer Wanne (14) angeordnet ist und zum Boden derselben gerichtet ist; und
— ein Einspritzrohr (22) für eine Reaktionsflüssigkeit, wobei die Höhe der Reaktionsflüssigkeit so geregelt wird, daß sie sich unter dem Injektionskopf (21) für Natrium befindet.

2. Einrichtung nach Anspruch 1, dadurch gekennzeichnet, daß der Injektionskopf (21) den zentralen Bereich der Ablenkung (20) bildet, wobei die Ablenkung (20) eine Rotationssymmetrie um eine vertikale Achse aufweist, wobei das Einspritzrohr (22) entlang dieser Achse unter dem Injektionskopf angeordnet ist.

3. Einrichtung nach einem der Ansprüche 1 oder 2, dadurch gekennzeichnet, daß die durch die Ablenkung (20), den Injektionskopf (21) für Natrium und das Einspritzrohr (22) gebildete Anordnung von wenigstens einer porösen Wand (28) umgeben ist, die den Durchgang von während der Reaktion erzeugtem Wasserstoff ermöglicht.

4. Einrichtung nach Anspruch 3, dadurch gekennzeichnet, daß sie außerdem aufweist:
— einen Deckel (33), der die Wanne (14) in ein unteres Volumen, das die Reaktionsflüssigkeit enthält, und ein oberes Volumen trennt, wobei ein Zwischenraum zwischen der inneren Wand der Wanne (14) und dem Rand des Deckels (33) gearbeitet ist und dieser sich auf einer Höhe unterhalb der des Injektionskopfes (21) befindet; und
— eine Vorrichtung, um die freie Oberfläche oder Höhe der Reaktionsflüssigkeit auf der gleichen Höhe wie die des Deckels (33) zu halten.

5. Einrichtung nach einem der Ansprüche 1 bis 4, dadurch gekennzeichnet, daß die Versorgungsvorrichtung für Natrium des Injektionskopfes (21) umfaßt:
— eine Vorratswanne (1) für flüssiges Natrium;
— wenigstens ein Rohr (5), das die Wanne (1) mit der Strahlablenkung (20) verbindet;
— ein Ventilgehäuse (6), das auf dem Rohr (5) angeordnet ist; und
— eine Verdrängerpumpe (9), die über ein Rohr (7) mit dem Ventilgehäuse verbunden ist.

6. Einrichtung nach einem der Ansprüche 1 bis 5, dadurch gekennzeichnet, daß sie außerdem eine thermische Regulierungsvorrichtung für das am Injektionskopf (21) ankommende Natrium aufweist.

7. Einrichtung nach Anspruch 6, dadurch gekennzeichnet, daß die thermische Regulierungsvorrichtung für das am Injektionskopf (21) ankommende Natrium aufweist:
— ein Rohr (15), das mit dem Injektionskopf (21) in Verbindung steht und durch das Natrium fließt;
— einen Tubus (16), der das Rohr (15) umgibt, wobei der Innenraum des Tubus (16) mit einer organischen Flüssigkeit gefüllt ist; und
— eine Heizvorrichtung (17) für diese organische Flüssigkeit.

8. Einrichtung nach Anspruch 7, dadurch gekennzeichnet, daß diese Heizvorrichtung für die organische Flüssigkeit wenigstens ein im Innern der organischen Flüssigkeit angeordnetes Heizelement (17) umfaßt.

9. Einrichtung nach einem der Ansprüche 7 oder 8, dadurch gekennzeichnet, daß sie außerdem ein thermisches Isoliationsmaterial (19) umfaßt, das außerhalb des Tubus (16) und in Kontakt mit demselben angeordnet ist.

## Claims

1. Plant for converting sodium into aqueous sodium hydroxide, comprising:
— an injection head (21) with a controlled flow rate of sodium, comprising at least one hole allowing sodium to pass through under pressure;
— means for feeding the injection head (21) with sodium;
characterized in that it comprises:
— a jet baffle (20) in which the injection head (21) is incorporated and which is arranged inside a vessel (14) and faces the bottom of the latter; and
— a lance (22) for ejecting a reaction liquid, the level of the reaction liquid being controlled so that it is situated below the sodium injection head (21).

2. Plant according to Claim 1, characterized in that the injection head (21) forms the central part of the baffle (20), the baffle (20) having a symmetry of revolution about a vertical axis, the ejection lance (22) is placed following this axis and below the injection head.

3. Plant according to either of Claims 1 and 2, characterized in that the assembly made up of the baffle (20), the sodium injection head (21) and the ejection lance (22) is surrounded by at least one porous wall (28) allowing the flow of the hydrogen evolved during the reaction.

4. Plant according to Claim 3, characterized in that it additionally comprises:
— a lid (33) dividing the vessel (14) into a lower volume containing the reaction liquid and an upper volume, a space being arranged between the inner wall of the vessel (14) and the edge of the lid (33) and the latter being at a level which is lower than that of the injection head (21); and
— means for maintaining the free surface or level of the reaction liquid at the same level as this lid (33).

5. Plant according to any one of Claims 1 to 4, characterized in that the means for feeding the injection head (21) with sodium include:
— a liquid sodium storage vessel (1);

— at least one conduit (5) connecting the said vessel (1) to the jet baffle (20);
— a valve box (6) arranged in the said conduit (5); and
— a volumetric pump (9) connected to this valve box by a conduit (7).

6. Plant according to any one of Claims 1 to 5, characterized in that it additionally comprises means for controlling the temperature of the sodium delivered to the injection head (21).

7. Plant according to Claim 6, characterized in that the said means for controlling the temperature of the sodium delivered to the injection head (21) include:
— a conduit (15) communicating with the injection head (21) and through which the sodium flows;
— a tube (16) surrounding the conduit (15), the inner space of the tube (16) being filled with an organic liquid; and
— means for heating (17) this organic liquid.

8. Plant according to Claim 7, characterized in that the means for heating the organic liquid include at least one heating element (17) placed within this organic liquid.

9. Plant according to either of Claims 7 and 8, characterized in that it additionally includes a thermally insulating material (19) placed outside the tube (16) and in contact with the latter.

FIG. 1

# FIG. 2

EP 0 245 148 B1

FIG. 3